(19) Europäisches Patentamt
European Patent Office
Office européen des brevets

(11) **EP 1 437 574 A1**

(12) **EUROPÄISCHE PATENTANMELDUNG**

(43) Veröffentlichungstag:
**14.07.2004 Patentblatt 2004/29**

(51) Int Cl.7: **G01D 5/244**

(21) Anmeldenummer: **03029898.8**

(22) Anmeldetag: **29.12.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **09.01.2003 DE 10301848**

(71) Anmelder: **Rodi, Anton**
**69181 Leimen (DE)**

(72) Erfinder: **Rodi, Anton**
**69181 Leimen (DE)**

(54) **Messvorrichtung für periodische Signale mit Korrektur von Amplituden- und Phasenfehlern**

(57) Es wird eine Messeinrichtung zur Erfassung von Größen, insbesondere von Winkeln oder Wegstrekken unter Verwendung einer Sensoranordnung, die zwei zueinander phasenverschobenen Signale liefert und einer Messwertaufbereitung beschrieben.

Es wird der Sensoranordnung eine Abgleicheinheit nachgeschaltet, die die Amplituden der phasenverschobenen Signale aneinander angleicht und/oder aus den zueinander phasenverschobenen Signalen um etwa 90° gegeneinander phasenverschobene Signale erzeugt, die ausgewertet werden.

Figur 3

**Beschreibung**

Die Erfindung betriff eine Messeinrichtung zur Erfassung von Größen, insbesondere von Winkeln und Wegstrecken mit den Merkmalen des Oberbegriffs des Anspruchs 1.

Für die überwiegend im Markt befindlichen Winkel- und Wegmesssysteme werden Sensoren eingesetzt, die mehr oder weniger der Sinusschwingung entsprechende Signalfolgen - in Kombination mit einem geeigneten Maßstabliefern. Um die Dreh- bzw. Bewegungsrichtungen zu erfassen, sind bereits Sensoranordnungen mit 2 Sensoren erforderlich, die sinnvollerweise so angeordnet sind, dass das Zusammenwirken mit dem zugeordneten Maßstab eine Sin/Cos-Signalfolge ergibt. Zusätzlich erlaubt die so winkel- bzw. wegversetzte Signalfolge der Sensoren innerhalb einer Periode, d. h. einer inkrementellen Teilung des zugeordneten Maßstabs, die feinere Erfassung dieser Teilstrecken und somit höhere Auflösung. Sowohl bei Inkremental- als auch Absolut-Winkelund Wegmesssystemen macht man sich das zunutze und setzt dafür geeignete AD-Wandler bzw. sogenannte Interpolatoren ein. Für ein neuartiges Absolutmesssystem sind in der Patentschrift DE 19505176 A1 die auf optischen Wegen erzeugten Sin-/Cos-Signale beschrieben und dazu ergänzend sind weitere Ausführungen zur Signalauswertung in solchen Sensorsystemen in der Patentschrift CH 210599 gemacht.

Das Prinzip der Sin-/Cos-Signalfolge wird ganz unabhängig von den eingesetzten Sensor- Wirkprinzipien wie z. B. bei optischen, induktiven, kapazitiven und magnetischen angewandt.

Nachstehend wird insbesondere auf die spezifischen Gegebenheiten bei sogenannten magnetischen Winkel- und Wegmessgebern eingegangen, um die grundsätzlichen Erfordernisse der Sensorsignalaufbereitung für hochauflösende und genaue Erfassungssysteme von Winkel- und Wegstrecken im industriellen Einsatz aufzuzeigen.

Die derzeitigen Inkremental- und vor allem hochauflösende Absolutgeber sind für Winkel- und Wegmesssysteme überwiegend in den sogenannten "Anbaugebern" in geschlossen gekapselter Form mit Eigenlagerung ausgeführt. Darin sind der Maßstab und Sensor mit der Signalaufbereitung und neuerdings auch die AD-Wandlung bzw. Interpolation samt Messwert Aufbereitung und Datentransfer in einem Messgebergehäuse untergebracht. Diese Messgeber sind zwar präzise beim Messgeberhersteller zu montieren und zu überprüfen, aber fallen groß und voluminös in der Bauform aus. Mittels Rotor- bzw. Statorkupplung lassen diese sich dort wo genügend Raum zum Einbau zur Verfügung steht einfach an die zu messende Bewegungseinheit anbringen,. Die aufwendige Bauweise und teure Eigenlagerung lässt keinen geeigneten breiten Standardeinsatz an den vielen Bewegungseinrichtungen von Maschinen und Geräten zu. Aber die zunehmende Automatisierung verlangt die kostengünstige und kleine Ausführung von Winkel- und Wegmessgeber an beliebige Verstelleinrichtungen, um die Positionen über die übergeordnete Steuerung präzise und wiederholt zu erfassen und anzusteuern. Daher kommen neuerdings dafür Neuentwicklungen mit sogenannten "Einbaugeber" in Betracht, die ohne teure Eigenlagerung ausgeführt werden und den Maßstab vom Sensor getrennt raumsparend unterbringen können. Begünstigt wird dieser Trend durch die Möglichkeit der Integration von Sensorfunktionen sowie der Signal- mit Messwertaufbereitung mittels Mikroelektronik (ASIC). Die kleinen Abmessungen solcher Winkel- und Wegmesssysteme mit Ausführungen auf einem bis einigen HalbleiterChips, sowie deren geringe Kosten bei höheren Stückzahlen, erlauben die gewünschte Standardausführungen an Maschinen, Geräten sowie Aktuatoren (z. B. Elektromotoren).

Dabei ergeben sich aber erhebliche Hürden für die industrietauglichen Auslegung solcher Systeme, da in der bisher arbeitsteiligen Welt der Sensorhersteller die örtlichen Einbaubedingungen mit Umgebungseinflüssen und Toleranzen nicht ausreichend bekannt sind. Der Maschinen- und Gerätehersteller andererseits wenig über die sensorspezifischen Anforderungen weiß und daher diese auch nicht bei der Systemkonzeption ausreichend berücksichtigen kann. So beschreitet jeder Sensor- und Maschinen-/Geräte- sowie Systemkomponentenhersteller seine eigenen Standard-Funktions- und Einbaubedingungen. Die langlebigen Industriegüter mit austauschbaren Ersatzteilanforderungen sind hinderlich für eine nachträgliche und Hersteller übergreifende Standardisierung von Schnittstellen. Auf der binären Datenaustauschseite der Messwertausgabe ist das durch die Elektronik mit standardisierten Schnittstellen weitestgehend gelöst. Die Schnittstelle zwischen Sensor und Signalaufbereitung sowie Sensor und getrenntem Maßstab weist noch viele herstellerspezifische aber auch einbau- und umgebungsbedingte Abweichungen auf. Diese individuellen Anforderungen und Festlegungen lassen den Einsatz kostengünstiger Ausführungen mit bisherigen Lösungsansätzen bei kleineren bis mittleren Stückzahlen von einigen 10.000 Einheiten/Jahr nicht zu, da entweder für Sensoren, Maßstäbe, oder Signalaufbereitung jeweils zugeschnittene Spezialausführungen benötigt werden. Dies führt zwangsläufig zu Mehraufwendungen in der Entwicklung, Produktion und Ersatzteilhaltung und zudem zu geringen Stückzahlen mit höheren Preisen sowie längeren Umsetzzeiten bis zum Serienprodukt. Nur bei Produkten mit sehr hohen Stückzahlen, die größer einige 100.000 Einheiten pro Jahr umfassen, sind derzeit speziell zugeschnittene Lösungen optimal zu gestalten.

Die erfinderische Ausgestaltung an der Schnittstelle zwischen Sensoren und Messwertaufbereitung mittels einer Abgleicheinheit mit Merkmalen des Hauptanspruchs samt Unteransprüchen soll weitestgehend den optimalen Einsatz von Winkel- und Wegmesseinrichtungen ermöglichen.

Nachstehend werden bisher übliche Schnittstellen-Ausführungen an Magnet-Winkel-/Wegmesssystemen im Vergleich zur vorteilhaft ausgestalteter Schnittstelle mit der erfindungsgemäßen Abgleicheinheit erläutert.

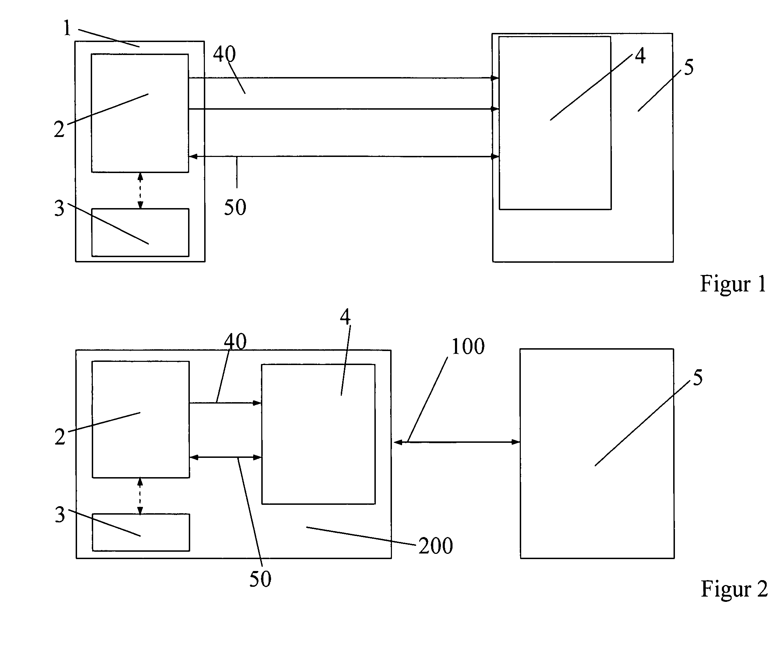

Fig. 1    zeigt einen eigengelagerten Anbau-Messgeber (1) , der eine Sensoranordnung (2) zur Ausgabe von Sin-/Cos-Signalen (40) im Zusammenwirken mit dem ebenfalls im Gehäuse des Gebers befindlichen aktiven Magnetmaßstab (3) besitzt. Zusätzlich wird für bekannte Absolut-Messsysteme die Ausgabe des binären Grobabsolutwertes (50) gezeigt, der durch eine separate Sensoranordnung mit der auf dem Maßstab absolutkodierten Strecke gebildet und aufbereitet wird. Die so gebildeten analogen Sin-/Cos-Werte (40), samt des binären Grobabsolutwertes (50), werden der übergeordneten Kunden-Steuerung (5) zur AD-Wandlung über die Signal- und Messwertaufbereitung (4) zur Verfügung gestellt.

Fig. 2    zeigt den eigengelagerten Anbau-Messgeber (200) mit der im Gehäuse untergebrachten Sensoranordnung (2) für Sin-/CosSignale (40) sowie Grobabsolutwerte (50) und den Maßstab (3) sowie den Interpolator (AD-Wandlung) mit Signal- und Messwertaufbereitung (4). Die Absolut-Messwerte werden hier über einen binären Datentransfer (100) der Steuerung (5) zur Verfügung gestellt.

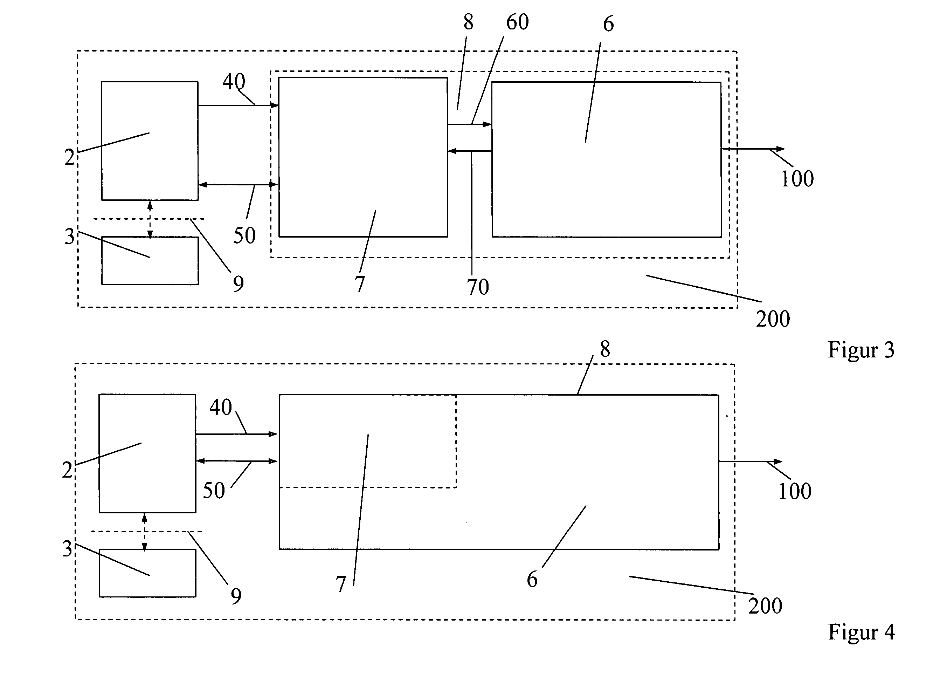

Fig. 3    zeigt einen Einbau-Messgeber (200), der eine Sensoranordnung (2) für Sin-/Cos-Signale (40) sowie Grobabsolutwerte (50) und einen getrennt (9) angebrachten Maßstab (3) aufweist. Zusätzlich wird hier über eine erfindungsgemäße Abgleicheinheit mit Signalverarbeitung (7) sowie AD-Wandlung samt Messwertaufbereitung und Datentransfer (6), der Binär-Datenaustausch (100) zur Verfügung gestellt. Dabei können die Abgleicheinheit mit Signalverarbeitung (7) und die AD-Wandlung mit Messwertaufbereitung und Datentransfer (6), einzeln oder als zusammengefasste Elektronikeinheit (8), z. B. im jeweiligen ASIC, ausgebildet sein.

Fig. 4    zeigt einen Einbau-Messgeber (200), der eine Sensoranordnung (2) für Sin-/Cos-Signale (40) sowie Gesamtabsolutwerte (50) und einen getrennt angebrachten Maßstab (3) aufweist. Zusätzlich wird über die integrierte, erfindungsgemäße Abgleicheinheit mit Signalaufbereitung (7) durch die Elektronik (8) mit AD-Wandler, Messwertaufbereitung und Datentransfer (6) der Binär-Datenaustausch (100) zur Verfügung gestellt.

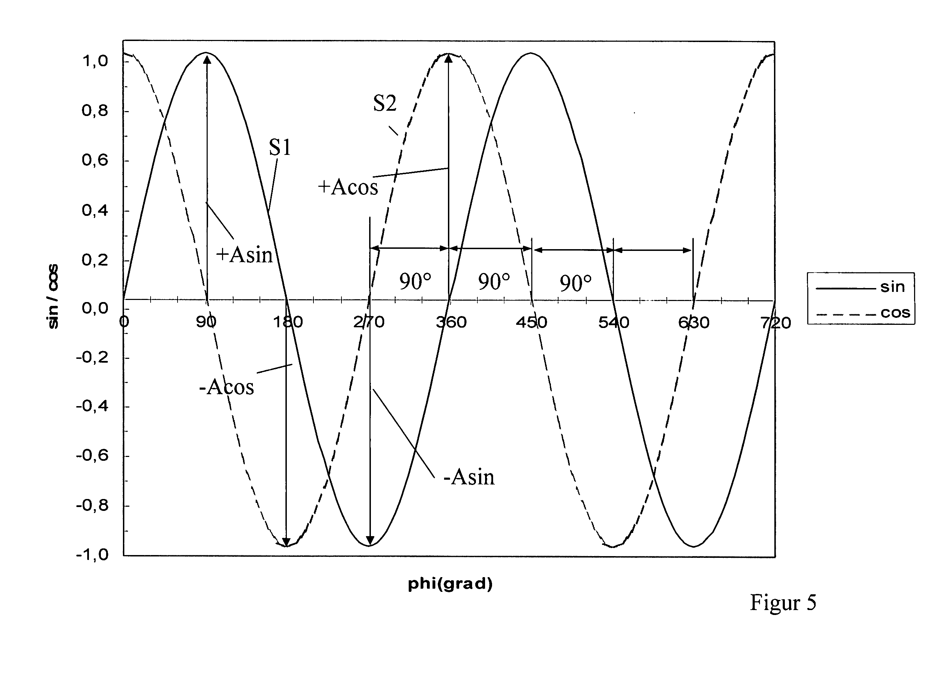

Fig. 5    mit AD-Wandler, Messwertaufbereitung und Datentransfer (6) der Binär-Datenaustausch (100) zur Verfügung gestellt. zeigt Sin-/Cos-Spannungsverläufe, wie sie z. B von. Sensoren unter idealen Bedingungen kommen. Bei dem Schnittpunkt der jeweiligen Sin-/Cos-Spannung mit der Null-Linie, die auch Referenz genannt wird, erhält man die jeweilige Amplitude ± Asin bzw. ± Acos der anderen um 90° phasenverschobenen Spannung und die vierfach mit π/2 unterteilte Periodendauer von 2π = 360°.

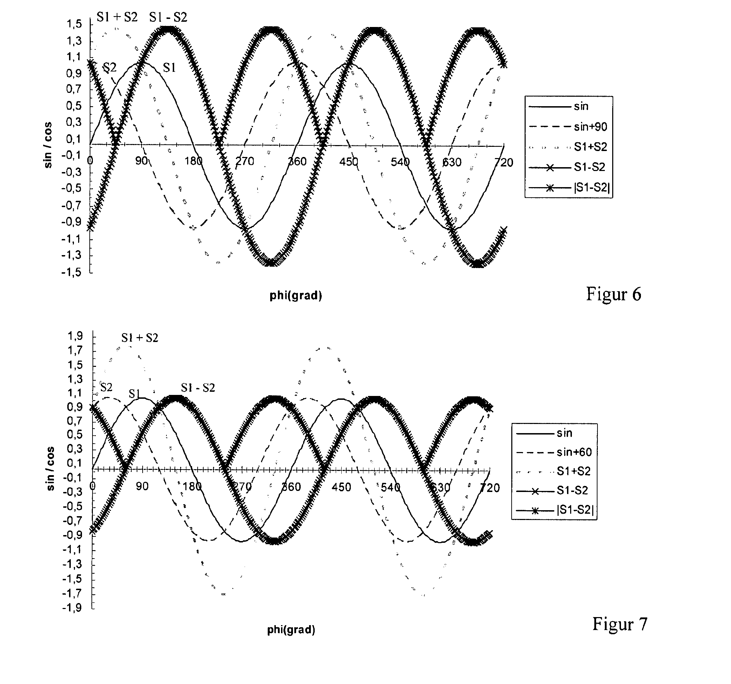

Fig. 6    zeigt die Sin-Spannung S1 und eine um + 90° phasenverschobenen zweite Spannung S2 (Cos-Spannung) mit gleicher Amplitude. Die Addition S1 + S2 und Subtraktion S1 - S2 dieser Spannungen ergeben ebenfalls um 90° gegeneinander und um 45° gegenüber S1 und S2 versetzte Spannungen mit √2facher Amplitude.

Fig. 7    zeigt die Sin-Spannung S1 und eine um + 60° dagegen phasenverschobene zweite Spannung S2 mit gleicher Amplitude. Die Addition S1 + S2 und Subtraktion S1 - S2 dieser Spannungen ergeben um jeweils - 75° gegenüber S1, bzw. S2 versetzte Spannungen, wobei die eine zusammengesetzte Spannung die √3 -fache Amplitude und die andere zusammengesetzte Spannung die gleiche Amplitude wie S1 aufweist.

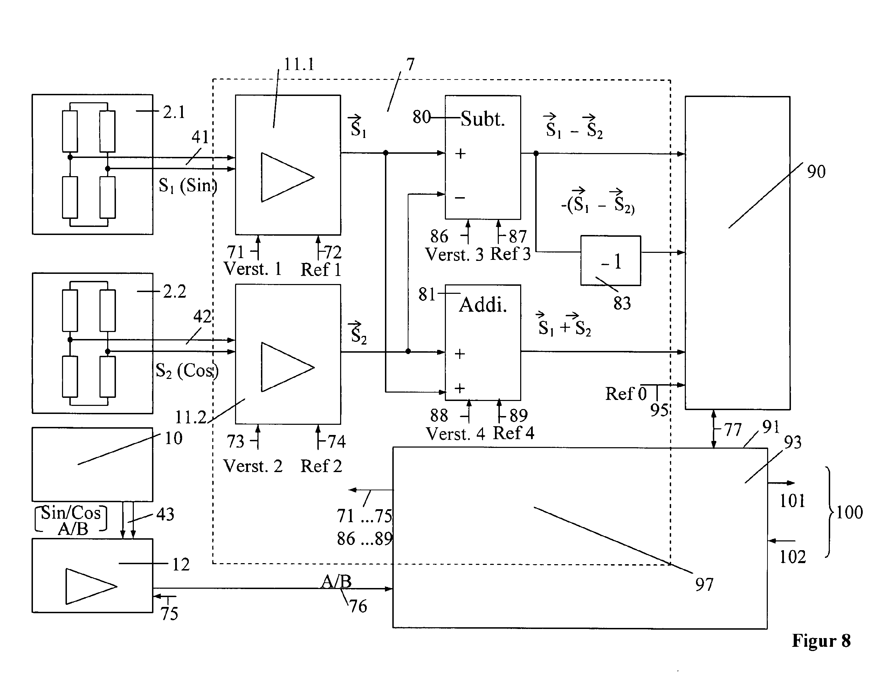

Fig. 8    zeigt eine erfindungsgemäße Ausführung der Abgleicheinheit und Messwertaufbereitung mit Datentransfer sowie Sensoren. Dabei sind zwei Sensoren (2.1, 2.2) so angeordnet, dass sich in Kombination mit Maßstäben (nicht gezeichnet) zwei phasenverschobene Spannungen S1 (41) und S2 (42), auch Sin und Cos bezeichnet, ergeben. Weiterhin ist eine TeilstreckenSensoreinheit (10) im Messsystem angebracht, um über entsprechende Signale (43) die jeweiligen Teilstrecken (76) zur zählerischen Auswertung zu übermitteln. In der Abgleicheinheit (7) werden die Amplituden und die Referenz der Sensorspannungen S1 und S2 erfindungsgemäß aufbereitet und der Interpolationseinheit (90) zur direkten Auswertung zugeführt. Mit deren Daten (77) und den Teilstrecken (76) wird in der Messwertaufbereitung (93) mit Datentransfer der Gesamtabsolutwert aufbereitet und über den Binär-Datenaustausch (100) der übergeordneten Steuerung zur Verfügung gestellt.

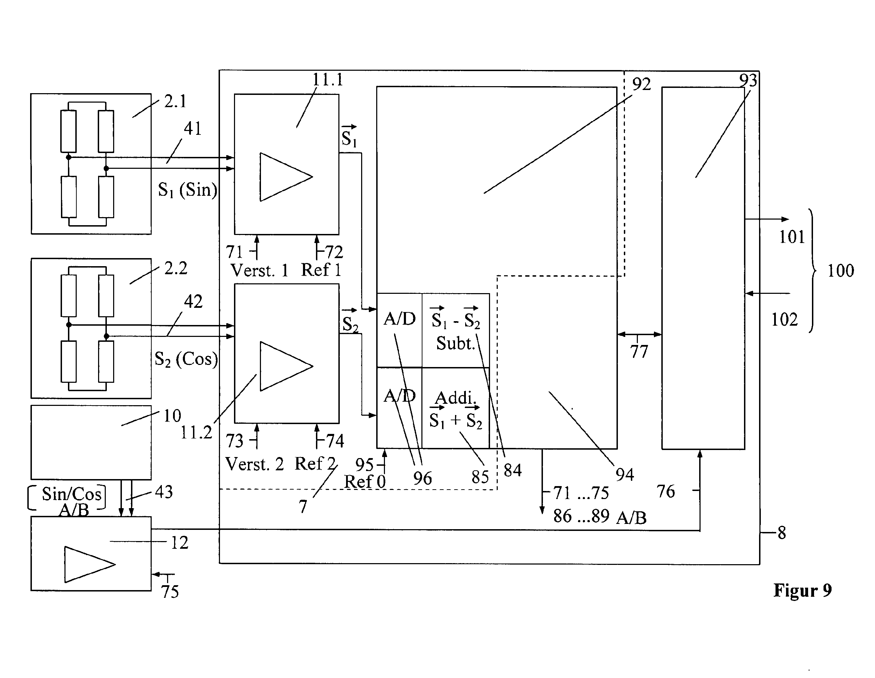

Fig. 9    zeigt eine weitere in die Elektronik (8) weitestgehend integrierte erfindungsgemäße Abgleicheinheit (7), mit Sensoranordnungen wie in Fig. 8.

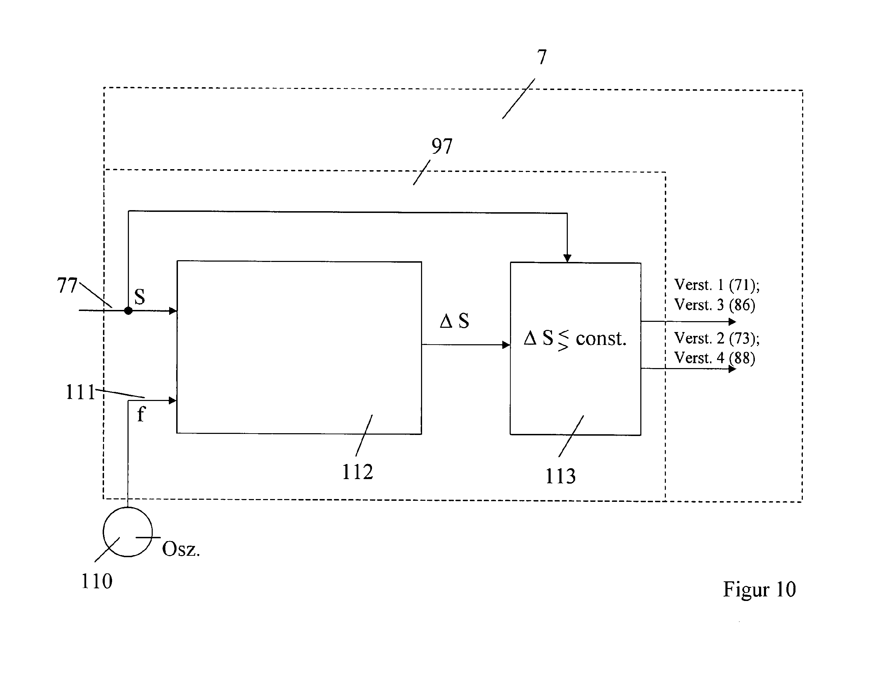

Fig. 10   zeigt die digitale Signalverarbeitung (97) für die Geschwindigkeitsermittlung mit Wegmessung (112, 113) als Bestandteil der Abgleicheinheit (7).

Die in Fig. 1 gezeigte Anordnung für einen Anbaugeber mit Eigenlagerung, sowohl für Inkremental- als auch Absolutgeber für Winkel- und Wegmesssysteme, ist in der industriellen Antriebstechnik für 13 bis 18 Bit-Auflösung weit verbreitet. In der aufwendigen Servosteuerung für Elektromotoren hat man die AD-Wandlung sowie die Signal und Messwertverarbeitung überwiegend auf einer Interface-Karte der Kunden-Steuerung untergebracht. Von dem Messgeber am Elektromotor werden analoge Sin-/Cos-Signale permanent übertragen. Um den Gesamtabsolutwert bilden zu können, wird ein grober Grundabsolutwert der Inkrementalteilung im Stillstand, oder bei niederen Drehzahlen, in binärer Form übertragen. Dieser Grundabsolutwert wird in der Steuerung gespeichert und mit den gewonnenen Feinwerten aus der AD-Wandlung der Sin-/Cos-Signalen zusammengesetzt und so der Gesamtabsolutwert gebildet. Abgesehen von den hohen Kosten der Gesamtanordnung, der problematischen Analog-Signalübertragung in störbehafteter Industrieumgebung, ist das Messsystem zu voluminös und nicht direkt geeignet, um BUS-Übertragungssysteme direkt zu bedienen. Dies ist der Grund für die nach wie vor noch sehr verbreitete Resolverlösung in der Antriebstechnik, wenn auch hiermit die höhere Genauigkeit und wünschenswerte Auflösung nicht erreicht wird.

Der Anbau-Messgeber nach Fig. 2 stellt bereits eine fortschrittlichere und weitgehend integrierte Messsystem-Lösung dar. Die gesamte Signalverarbeitung wird im Messgeber vorgenommen und der gebildete Gesamtabsolutwert binär über eine serielle Schnittstelle RS 485 bzw. RS 422 übertragen, die auch üblichen Bussystemen zugänglich sind. In der Patentschrift CH210599 wird so ein Messsystem eingehend behandelt. Nachteilig ist nach wie vor, dass der eigengelagerte Gesamtgeber mit dem Maßstab in einem großen Gehäuse untergebracht ist. Solche teuren und voluminösen Geberlösungen sind für den breiten integrierten Serieneinsatz an Maschinen und Geräten nicht geeignet. Gewünscht werden Einbaugeber ohne Eigenlagerung und mit Trennung des Maßstabs vom Sensor, in möglichst kleiner Bauform und kostengünstiger Ausführung.

Die individuell zugeschnittene Lösungen für eine Vielzahl von Herstellern von Sensoren und Messgebern, Aktuatoren sowie Steuerungsherstellern, haben es bisher nicht ermöglicht, die Einbaugeberversionen ohne Eigenlagerung anforderungsgerecht zu konzipieren. Für magnetische Messgeber existieren verschiedene und jeweils für bestimmte Anforderungs- und Umgebungsbedingungen passende Sensortechnologien, die z. B. auf magnetoresistiven (MR, GMR) bzw. hallbasierenden Messprinzipien beruhen.

Diese Messgeber haben unterschiedliche Sensorsignalausgaben und verschiedene Beschaltungen zur Folge und sind bisher durch unterschiedliche Signalanpassungsmaßnahmen samt damit einhergehenden Elektroniken zur AD-Wandlung sowie Messsignalverarbeitung gekennzeichnet. Hinzu kommen noch die sehr aufwendigen und voluminös breiten sowie industriell nach Messlänge zu gestaltende Maßstäbe für Absolutmesssysteme, die einem standardisierten Einsatz hinderlich sind. Eine Abhilfe hierzu beschreibt die DE 101 171 93.A1 gemäß der Absolutmaßstäbe produktionsgerecht und kostengünstig zu erstellen sind. Dies bedeutet einen wichtigen Schritt für die modular gestaltbare Absolutmesssysteme. Zudem ermöglicht dieser Erfindung auch den Bau von kleinen magnetischen Messgebern mit Auflösungen von > 13 ... 16 Bit, die eine Realisierung der gesamten Geberelektronik samt Sensor auf einem Chip gestattet.

Nach wie vor jedoch muss für den Einbaugeber, neben den Anpassmaßnahmen für die unterschiedlichen Sensorausgangssignalen, die Problematik der Toleranz- und Umgebungsbedingungen am Einsatzort gelöst werden. Derzeit unternimmt man große Anstrengungen bei Magnetmesssystemen, sowohl auf der Sensor- als auch Maßstabseite, um mit möglichst engen Toleranzen in der Fertigung und Montage die gewünschten Genauigkeiten und Auflösungen zu erhalten. Allein den geforderten Teilungsabstand des Maßstabs präzise über die gesamte Messlänge und in Übereinstimmung mit der Sensoranordnung zu erstellen, ist eine fertigungstechnische Herausforderung im Gebersystem. Dazu kommt die problematische Magnetisierung von aktiven Magnetmaßstäben, die neben gleichbleibender Teilungsabständen auch die mindestens gleichförmige magnetische Induktion zur sinusförmigen Ausbildung von Sensorsignalen erfordert. Zusätzlich spielen Einbautoleranzen, z. B. bei längeren Wegmessgebern eine erhebliche Rolle, die hohe Ansprüche an die Konstruktion und Montage für den Maßstab und die Sensoren bezüglich Höhenabstand und Achsensymmetrie stellen.

Mit der erfinderischen Ausgestaltung der Abgleicheinheit wird weitestgehend Abhilfe zur Lösung der aufgezeigten Problemstellungen geschaffen. Mit den im Hauptanspruch beschriebenen Maßnahmen wird flexibel auf die unterschiedlichen Sensorsignale, bedingt durch die Sensoren selbst und vor allem der Interaktion der Sensoren mit dem Maßstab in den gegebenen Einbau- und Umgebungsbedingungen, adaptiv und kompensatorisch reagiert. Die erfinderische Abgleicheinheit erlaubt den breiten Einsatz unterschiedlicher Sensoren und Maßstäbe zur hochauflösenden sowie genauen Messung von absoluten Winkel- und Wegmessstrecken. Somit werden die Voraussetzungen zum standardisierten Einsatz für die klein und kostengünstig zu bauenden Einbaugeber ohne Eigenlagerung im breiten Industrieeinsatz geschaffen.

In Fig. 3 wird ersichtlich, dass erfindungsgemäß zwischen den Sensoren(2)mit oder ohne Signalverstärkung - und der AD-Wandlung samt Messwertverarbeitung sowie Datentransfer (6) zur Ausgabe des Gesamtabsolutwertes über den Binär-Datenaustausch (100), die Abgleicheinheit mit Signalaufbereitung (7) eingebracht wird. Die Abgleicheinheit bereitet die von den unterschiedlichsten Sensoren kommenden sinusförmigen Spannungsverläufe so auf, dass z. B. die Werte aus dem Interpolator (A/D-Wandlung) stets gleichbleibend unter Echtzeitbedingungen zur Bildung des Gesamtabsolutwertes herangezogen werden können. Insbesondere wird eine Interpolation (A/D-Wandlung) ermöglicht, die z. B. die absolute Feinauflösung von 8 ... 10 Bit einer Teilungsstrecke - z. B. bei Magnetsystemen mit MR-Sensoren ein N/S-Polabstand - mit der Taktfrequenz der Digital- bzw. Rechnerlogik von ca. 30 MHz bis 50 MHz erlaubt.

Zweckmäßig ist die Abgleicheinheit mit Signalaufbereitung z. B. in ein Mixed-Signal-ASICs samt Interpolator (AD-Wandlung) zu integrieren, wie es in der Fig. 4 gezeigt wird. Dies hat den Vorteil, die vielfältigen Logikverknüpfungen für Abgleich-, Interpolations- und Messwertaufbereitungs-Zwecke optimiert zu nutzen und platzsparend unterzubringen. Auch werden so mit einem ASIC-Chip erhebliche Herstellkosten gespart und die weitere Integration mit den Sensoren schrittweise vorbereitet. Der Endausbau ermöglicht den Einbau-Messgeber auf einem Chip unterzubringen, um die geeigneten Voraussetzungen für die Automation an den vielzähligen Verstelleinrichtungen von Maschinen und Geräten mittels Einbaugeber zu schaffen.

Die Sin-/Cos-Spannungsverläufe von z. B. Magnet-Sensoren sind idealisiert in Fig. 5 aufgezeichnet. Zum Zeitpunkt der Schnittpunkte mit der Null- bzw. Referenzlinie der zwei um 90° phasenverschobenen Signalfolgen gleicher Frequenz wird die jeweilige Amplitude der beteiligten Sensorsignale erfasst. Dies geschieht sowohl für die oberhalb und unterhalb der Referenz verlaufenden Signalfolgen zur Ermittlung von + Asin, + Acos, -Asin und -Acos. Klar ersichtlich wird daraus, dass die Schnittpunkte mit der Referenz während einer Periode von 360° (2 π) viermal stattfinden und idealerweise jeweils gleiche Abstände von 90° (π/2) haben. Auch ist offensichtlich, dass die Schnittpunkte der einen Signalfolge mit der Referenz zur Ermittlung der maximalen Amplitude der anderen Signalfolge dient. Im Idealfall haben zwei solche Sensorspannungen - mindestens während einer gleichen Periodendauer - gleiche Amplituden und gleichabständige Schnittpunkte mit der Referenz. Die realen Sensorsignale weisen keinesfalls diese Idealverläufe auf, wenn man von der weitestgehend erreichbaren gleichen Periodendauer 360° (2 π) absieht. Vielmehr haben die Sensorsignale untereinander ungleiche Amplituden, zur Referenz unsymmetrische Verläufe und mit ihr auch ungleiche Schnittpunktabstände während der Periodendauer.

Durch die erfindungsgemäße Ausführung der Abgleicheinheit wird hier Abhilfe geschaffen, in dem idealisierte Signalverläufe weitestgehend bestimmt und bei der nachfolgenden Signalauswertung zur Erlangung von Absolut-Winkel- bzw. Wegmessstrecken herangezogen werden.

Auch ist die Phasenverschiebung von exakt 90° der Sensorsignale nicht ausreichend genau einzuhalten, so dass die hochpräzise Erfassung des Absolutwertes von Winkel- und Wegmessstrecken durch die bekannten trigonometrischen Sin-/Cos-Auswertmethoden, z. B. durch Bildung von tan φ, nicht gewährleistet wird.

Damit diese 90° bzw. 270° Phasenverschiebung z. B. bei Magnet-Sensoren gewährleistet wird, mussten bisher die zwei Sensoren genau 90° versetzt innerhalb der Teilungsperiode angeordnet werden. Abgesehen von den Absolutgenauigkeiten der Teilungsabstände von Magnet-Maßstäben, ist die Fertigung solcher Sensoren mit Zuordnung zu den unterschiedlichsten Abmessungen höchst problematisch und kostenintensiv. Im Vergleich zur exakten Einhaltung des absoluten Teilungsabstandes ist es präziser und einfacher, alle Teilungen gleich zueinander zu machen. Der relative Fehler ist wesentlich geringer und in der Produktion besser beherrschbar.

Hierzu wird eine elegante Abhilfe in der weiterführend erfinderischen Gestaltung der Abgleicheinheit geboten, die einen höchst genauen Phasenversatz von 90° zweier Signalverläufe gewährleistet. Zusätzlich wird noch eine Ausmittelung der Kurvenform (Oberwellen) dabei erreicht, die die Signalqualität der Sensoren für hochgenaue Messeinrichtungen gewährleistet.

Diese Lösung lässt sich einfach aus den trigonometrischen Zusammenhängen sinusoidalen Größen ableiten:

Durch geometrische Addition und Subtraktion zweier beliebig zueinander phasenverschobener Signale gleicher Frequenz und Amplituden entstehen zwei neue sinusoidale Signalfolgen, die genau um 90° zueinander versetzt sind.

Auf die nähere Ableitung wird hier verzichtet. Die Zusammenhänge ergeben sich aus den bekannten Grundgleichungen,

$$A_{+,-} = \sqrt{A_1^2 + A_2^2 \pm 2A_1 * A_2 \cos(\varphi_2 - \varphi_1)}$$

$$A_+ bzw. A_- \tan \varphi_{+,-} = \frac{A_1 * \sin \varphi_1 \pm A_2 * \sin \varphi_2}{A_1 * \cos \varphi_1 \pm A_2 * \cos \varphi_2}$$

wobei A+, bzw. A- die Amplituden der Vektoren (S1 + S2), bzw. (S1 - S2) und φ die Phasenverschiebung der beiden Vektoren ist.

Beispielhaft werden die Zusammenhänge in Fig. 6 aufgezeigt. Gegenüber dem ursprünglichen System mit $\varphi_1 = 0$ und $\varphi_2 = 90°$ sind durch die Addition S1 + S2 und Subtraktion S1 - S2 die Signalfolgen in diesem Beispiel dagegen um genau 45° jeweils phasenverschoben und haben eine um √2-fach vergrößerte Amplitude. Aus den Gleichungen und dem aufgezeigten Beispiel wird offensichtlich, dass die von 90° abweichende Phasenbeziehung der Signalfolgen damit kompensiert und so der präzisen Messwertauswertung zugeführt werden kann.

Bei jeder beliebigen Signalfolge von $\vec{S_1} = A_1 * \sin (x + \varphi_1)$ und $\vec{S_2} = A_2 * \sin (x + \varphi_2)$ mit A1 = A2 lässt sich diese Methode durchführen. Dies wird in Fig. 7 mit einer Phasenverschiebung von 60° zwischen den zwei Signalverläufen nochmals dargestellt. Gegebenenfalls müssen aber die Amplituden A1 und A2 zuvor aneinander angeglichen werden.

Neben der gelösten Problematik der exakten 90° Phasenverschiebung, eröffnen sich damit ganz neue Möglichkeiten zum weiten Einsatz von standardisierte Messeinrichtungen. Es ist mit obiger Methode der Signalverarbeitung in der Abgleicheinheit gewährleistet, dass die Abstände der Sensoren nicht mehr an die Teilungsabstände der Maßstäbe gebunden sind. Somit lässt sich mit der gleichen Sensoranordnung die Winkel- und Wegmessung auch mit dazu abweichenden Maßstabteilungen vorteilhaft und präzise bewerkstelligen. Dies erlaubt den breiten Einsatz von festen Sensoranordnungen in Großstückzahlen in mikroelektronischen Ausführungen (ASIC-Dick-/Dünnfilm-Technik), ohne auf die Maßstabteilungen stets festgelegt und damit in der Stückzahl begrenzt zu sein. Auch bei kleinen Abweichungen zwischen den Maßstabteilungen und Sensoranordnung ist das für präzise Absolutmesswert-Erfassungen von großer Bedeutung, da z. B. Längenänderungen der Maßstäbe durch Temperaturgänge oder Fertigungstoleranzen bei der Herstellung bzw. Montage kompensiert werden.

Die Darstellung der Funktionsabläufe der erfindungsgemäßen Signalverarbeitung in der Abgleicheinheit wird aus der Fig. 8 ersichtlich. Es wird darin auf bekannte Schaltungsausführungen bewusst verzichtet, um die Zusammenhänge in der Abgleicheinheit übersichtlich zu beschreiben. Sämtlich hierzu notwendige Schaltungen analoge wie digitale sind in der einschlägigen Fachliteratur beschrieben, wie z. B. Tietze / Ch+ Schenk ISBN .3 - 540 - 42849 - 6 Springer Verlag Berlin.

Die in den Fig. 3 und 4 bereits allgemein beschriebene und zwischengeschaltete Abgleicheinheit mit Signalverarbeitung (7) befindet sich hier zwischen den Sensoren (2) und der Interpolationseinheit (AD-Wandlung) (90) sowie vor der Messwertverarbeitung mit Gesamtabsolutwertbildung samt Datentransfer (91) zur Binär-Ausgabe (101). Die Abgleicheinheit mit Signalverarbeitung (7) setzt sich somit in Fig. 8 aus den Differenzverstärkern (11), dem Addierer (81), dem Subtrahierer (80) und der notwendigen digitalen Logik (97) zusammen.

Die jeweilige Sensoreinheit (2.1) und (2.2) liefert Signale, deren Größen in stetiger Funktion verlaufen und auf die Teilstrecken des zugeordneten Maßstabs bezogen sind. Vielfach sind die Sensoren in Brückenschaltungen angeordnet, so dass deren Signale sich annähernd symmetrisch um die halbe Versorgungsspannung bewegen. Der Maßstab und der Sensor wird nicht näher erläutert, da diese für die verschiedensten physikalischen Mess-prinzipien (z. B. optisch, magnetisch, induktiv, kapazitiv usw.) für Winkel- und Wegmessgeber hinlänglich bekannt sind. Nachfolgend wird wiederum bevorzugt auf die Gegebenheiten der Magnet-Winkel- und Wegmessgeber eingegangen. Diese Ausführungen sind prinzipiell genauso auf andere Sensortechnologien übertragbar und nicht z. B. auf ein physikalisches Wirkprinzip beschränkt. Bei den Winkel- und Wegmessgebern wird bevorzugt das Sensorsystem so konzipiert, dass die Signalfolge sinusoidalen Größen entspricht. Daher wird nachfolgend auf diese stetig verlaufenden elementaren "Trigonometrische Funktionen" zurückgegriffen, obwohl die erfinderische Abgleicheinheit auch für andere stetig verlaufende Elementarfunktionen der Sensorsignale angewandt werden kann. So können die phasenverschobenen Signalfolgen z. B. einen dreieckförmigen bzw. quadratischen Verlauf mit symmetrischen Schnittpunkten mit der Referenz aufweisen und entsprechend über Interpolatoren (A/D-Wandler) ausgewertet werden.

Die Sensoreinheit (2.1) und Sensoreinheit (2.2) sind zweckmäßigerweise in einer gemeinsamen Sensoreinheit anzuordnen. Marktüblich liefern dann solche Sensoreinheiten die Sin-/ Cos-Signale. In Fig. 8 ist S1 (Sin) (41) und S2 (Cos) (42) jeweils als Differenzspannung an die zugeordneten Differenzverstärker (11.1, bzw. 11.2) geführt. In dem jeweiligen Differenzverstärker (11.1, bzw. 11.2) oder OPAMP werden die Sensorspannungen über einen wählbaren Verstärkungsfaktor am Verstärkungseingang (71) bzw. (73) auf die gewünschte Spannungsamplitude und gewünschte Referenz (72) bzw. (74) zur Weiterverarbeitung gebracht. Die Sensorspannungen bewegen sich marktüblich und ohne integrierte Verstärker in ihren Maximalamplituden bei einigen mV bis ca. 100 mV. Eine hoch auflösende Interpolation verlangt jedoch mindestens 0,5 bis 1 Vss und darüber, um die gewünschten Auflösungsschritte bei der Winkel- bzw. Wegstrecke zu erreichen. Zusätzlich ist es sehr wichtig, die Maximalamplituden der Sin- /Cos-Signale mindestens während der Teilungsstrecke präzise gleich zur Auswertung zu haben, so dass schon allein aus diesem Grund ein frei wählbarer Verstärkungsfaktor zur Anpassung der abweichenden Sensorspannungen zweckmäßig ist. Die Amplituden, der so zu $\overrightarrow{S_1}$ - und $\overrightarrow{S_2}$ -verstärkten Sensorspannungen bewegen sich üblicherweise bei der halben Versorgungsspannung von 5V und sollen aber präzise untereinander gleich sein. Dazu sind jedoch über Ref 1 (72) und Ref 2 (74) auch entsprechend fein wählbare Abgleichvorgänge der Referenz zu treffen, um eine exakte Auswertung vornehmen zu können. Darüber hinaus müssen diese über Ref 1 und Ref 2 abgeglichenen Referenzspannungen möglichst gleich der zur Interpolation bzw. AD-Wandlung (90) gemeinsamen Referenzspannung Ref 0 (95) sein.

Bei idealen Sensorsignalverläufen, die dauerhaft unbeeinflusst von Betriebsbedingungen, wie z. B. Temperatur, Abstand Sensor/Maßstab und Ungenauigkeiten des Maßstabs (Teilungen und Magnetfelder) sind, würden diese Abgleichmaßnahmen vor Ort bei der Inbetriebnahme bereits zur Winkel- und Wegmessauswertung ausreichen. Abgesehen von den vielen Parametern, die erheblich durch Fertigungsfehler, Einbaumontage und Umgebungsbedingungen beeinflusst werden, ist es aus Zeit- und Kostengründen nicht zumutbar, vor Ort Sensoren abzugleichen. Schon gar nicht beim Austausch von Messeinrichtungen bei weltweit verteilten Maschinen und Geräten. Es ist daher eine hierfür geeignete Methode bzw. Schaltungsausführung zu finden, wenn man präzise und hochauflösende Winkel- und Wegmesssysteme industriegerecht an vielen Maschinen und Geräten einsetzen will. Dies wird mit der erfindungsgemäßen Abgleicheinheit (7) nach Fig. 8 weitestgehend erreicht, in der über die Amplitudenbestimmung, Referenzbestimmung und Geschwindigkeitsermittlung die entsprechenden adaptiven Abgleichvorgänge bedarfsgerecht mittels digitaler Signalverarbeitung (97) sowie Steuerausgängen 71, 72, 73, 74 in allen Betriebszuständen der Messeinrichtung vorgenommen werden.

Bereits beim ersten einschalten der stillstehenden Messvorrichtung mit dem zugeordneten Maßstab, ist eine Überprüfung der Sensorsignale zur geeigneten Auswertung über den Interpolator zweckmäßig. Dazu wird in der Abgleicheinheit (7) der Betrag der Signalvektoren von $\vec{S_1}$ und $\vec{S_2}$ festgestellt, der sich zwischen

$$|A| < |\vec{S_1}| + |\vec{S_2}| < 1{,}414 * |A|$$

bewegen muss, wobei

$$|A| = |A_1| = |A_2|$$

$$|\vec{S_1}| = A_1 * \sin(x + \varphi_1)$$

$$|\vec{S_2}| = A_2 * \sin(x + \varphi_2) \text{ mit } A_1 = A_2 = A$$

ist.

Befindet sich der Betrag $|\vec{S_1}| + |\vec{S_2}|$ bei der Stillstandsmessung nicht innerhalb von 1 ... 1,41 * |A|, so sind die Verstärkungsfaktoren 1 (71), bzw. 2 (73) jeweils entsprechend einzustellen. Bei den überwiegenden Anwendungen wird diese Methode der Signalbestimmung ausreichend sein und die bekannt komplexere Auswertung der Schaltungsanordnung mit $(\vec{S_1})^2 + (\vec{S_2})^2 = 1$ überflüssig machen. Zudem führen bei der Quadrierung bereits kleine Fehlerabweichungen in den Messsignalen zu fehlerhaften Abgleichmaßnahmen.

Schon bereits bei Verstellungen der Messeinrichtungen um z. B. eine Periodenlänge (Maßstabsteilung), werden die Amplituden durch die Abgleicheinheit nach den in Fig. 5 beschriebenen Zusammenhängen präzise angeglichen und die Messsignale optimal für die genaue Interpolation (AD-Wandlung) aufbereitet. Zu den Zeitpunkten der im Bewegungsablauf stattfindenden Schnittpunkte der Signalfolgen mit der gemeinsamen Referenz, können die Messwerte permanent zur jeweiligen zugeordneten Amplitudenbestimmung herangezogen werden, oder z. B. mittelwertbildend erfasst und als Größe direkt den Differenzverstärkern 11 durch die digitale Signalverarbeitung (97) über die Steuerausgänge 71 bis 74 zugeführt werden.

Auch sind andere Auswertungen der bei den Schnittpunkten mit der gemeinsamen Referenz erfassten Amplitudenwerte nach der Erfindung möglich. z. B. können die ermittelten mittleren Amplitudenwerte fest gespeichert werden und erst bei festgelegter Abweichung als neuer Verstärkungswert den jeweiligen Differenzverstärkern 11 (71 bzw. 73) über die digitale Signalverarbeitung (97) einzeln oder gemeinsam usw. zugeführt werden. Wenn die +A- und -A-Amplitudenwerte Differenzen aufweisen, so sind aber auch Abgleichvorgänge unter Echtzeit und innerhalb der permanent stattfindenden Interpolation vornehmbar. Besonders vorteilhaft stellte sich der Abgleich zum Zeitpunkt des Schnittpunktes mit der Referenz beim Interpolator nach Patentanmeldung 101 60 835. 7 heraus, da der sich verstellende Amplitudenwert zu diesem Zeitpunkt unkritisch ist und nicht zur falschen Interpolation und damit nicht zur fehlerhaften Auswertung führt.

Die so abgeglichenen Amplituden der Sensorsignale $\vec{S_1}$ und $\vec{S_2}$ können unmittelbar zur Interpolation (AD-Wandlung) (90) geführt werden, wenn ebenfalls die jeweiligen Schnittpunkte mit Ref 0 (95) gleichsymmetrisch verlaufen (siehe Fig. 5). Unter gleichsymmetrisch wird hier z. B. die jeweilige Halbperiode der Signale von 180° = π und die Phasenverschiebung zueinander von 90° = π/2 verstanden, die zu vier gleichen Schnittpunkten von π/2-Abstände der Signale mit der gemeinsamen Referenz Ref 0 (95) innerhalb der Periodendauer 360° = 2 π führen.

Wenn die Halbperioden der jeweiligen Signale π entsprechen und weitestgehend gleich sind, aber die Phasenverschiebung untereinander ungleich 90° = π/2 sind (siehe Fig. 7), so wird erfindungsgemäß in der Abgleicheinheit (7) eine Subtraktion $\vec{S_1} - \vec{S_2}$ (80) sowie eine Addition $\vec{S_1} + \vec{S_2}$ (81) durchgeführt und damit die gewünschte Phasenverschiebung von 90° = π/2 erreicht. Die Additionseinheit (81) und die Subtraktionseinheit (80) weisen wie die für die Differenzverstärker (11) beschriebenen Maßnahmen Amplitudenanpassungen mittels Verstärker Verst. 3 (86), bzw. Verst. 4 (88) und Referenzspannungsabgleich Ref. 3 (87) bzw. Ref. 4 (89) auf. Wenn die jeweiligen Amplituden und die Referenzen nach Subtraktion (80) und Addition (81) entsprechend zu den Schnittpunkten mit der Ref 0 (95) abgeglichen sind, so kann die Interpolation (AD-Wandlung) (90) präzise erfolgen und über die Messwertaufbereitung samt Gesamtabsolutwertbildung und Datentransfer (93) der Winkel-/Wegmesswert über die Binär-Ausgabe (101) der Kundensteuerung (5) zur Verfügung gestellt werden.

Die in Fig. 8 aufgeführte Invertierung (83) von - ($\vec{S_1}$ - $\vec{S_2}$ ) dient zur vorteilhaften Interpolation (AD-Wandlung) (90) mittels des 3-Vektorverfahren, das in der Patentanmeldung 10160835.7 näher beschrieben wurde. Auch wurde die Teilstrecken-Sensoreinheit (10) zur Erfassung von absolutkodierten Teilstrecken mittels Sin/Cos- bzw. A/B-Signalen (43) und Verstärker-Schaltung (12) mit einstellbarer Hysterese (75) aufgenommen, um die Methode und Ausführung der Gesamtabsolutwertbildung aus Feinabsolutwert (77) mittels Interpolator (AD-Wandler) (90) und aus dem A/B-Teilstreckensignal (76) in der Messwertaufbereitung samt Datentransfer (93) zur Binär-Ausgabe 101 zu verdeutlichen.

Mit der nach Fig. 8 verdeutlichten Methode und Ausführung von Abgleichvorgängen bei für Amplitudenbestimmung, Referenzbestimmung sowohl im Stillstand als auch im gesamten Bewegungsbereich sind bereits weitgehende Vorkehrungen für die in der Industrie vorhandenen Randbedingungen bezüglich Signalabweichungen bei Einbaugebern kompensatorisch getroffen worden, so dass sehr präzise Winkel- und Wegmessungen unter Echtzeitbedingungen erfolgen können. Die Methode kann prinzipiell auf jeden Messschritt noch ausgedehnt werden, indem man die Geschwindigkeit der Bewegungseinrichtung ermittelt und aus der gemessenen Zeit für eine zurückgelegte gemessene Wegstrecke in Beziehung bringt.

$$V_{ist} = s/t \qquad \rightarrow \qquad s_{soll} \quad = V_{ist} * t_{gemessen}$$

$$s_{ist} \quad = \text{gemessner Weg} \ = s_2 - s_1$$

$$t_{gemessen} \quad = \text{Zeit für zurückgelegten Weg } s_{ist},$$

$$\text{d. h. von } s_1 \text{ nach } s_2$$

$$\Delta s \quad = s_{ist} - s_{soll}$$

$$\Delta s = (s_2 - s_1) - V_{ist} * t_{gemessen}$$

Auf inkrementelle Werte bezogen ist mit guter Näherung $|\Delta s| \approx k$ = const, so dass die Abweichung davon zur Kompensation über die Amplitudenverstärkung bei den Signalvektoren $\vec{S_1}$ (71) sowie $\vec{S_2}$ (73) bzw. $\vec{S_1}$ - $\vec{S_2}$ (86) sowie $\vec{S_1}$ + $\vec{S_2}$ (88) jederzeit vorgenommen werden kann. Die Methode ist prinzipiell über Rechenalgorithmen beliebig erweiterbar und ändert nichts am grundsätzlichen Zusammenhang der Winkel- und Wegkompensation über die Amplitudenbeeinflussung. Mit diesen Maßnahmen lassen sich elegant gegebene Verzerrungen von nicht idealen sinusoidalen Größen über der Periodendauer kompensieren und so die Absolutgenauigkeit von Winkel und Wegmesssystemen erheblich steigern.

In Fig. 10 ist der Sachverhalt im Blockschaltbild der digitalen Signalverarbeitung (97) für Geschwindigkeitsermittlung mit Wegmessung (112, 113) als Bestandteil der Abgleicheinheit (7) dargestellt.

Nach der Interpolation (AD-Wandlung) (90) werden die Feinwerte innerhalb einer Teilstrecke (Maßstabsteilung bzw. Periodendauer 360° = 2 π) z. B. in 8 Bit-Auflösungsschritten über die Ausgabe (77) der digitalen Signalverarbeitung (97) als aufgelöste Wegstrecke ermittelt. Zusammen mit z. B. einer konstanten Zeitvorgabe t = 1/f einer für die digitale Logik ohnehin vorhandenen Taktfrequenz f (111) aus einem Oszillator (110) wird die Geschwindigkeit der gemessenen Bewegungseinrichtung $V_{ist}$ = s/t gebildet. Aus dem gemessenen Weg $S_{ist}$ und dem berechneten Weg $s_{soll}$ wird die Fehlerabweichung $\Delta s = s_{ist} - s_{soll}$ (112) ermittelt und einer Vergleichseinheit $\Delta s$ <> const. (113) zugeführt. Der Vergleichseinheit wird auch der absolute Weg s (77) zugeführt, die logisch aus der Größe des Messwertes innerhalb der Periodendauer von 2 π die entsprechende Beeinflussung der Verstärkereingänge in Fig. 8 für Verst 1 oder Verst 2 bzw. Verst 3 oder Verst 4 der Vektoren $\vec{S_1}$ oder $\vec{S_2}$ bzw. $\vec{S_1}$ - $\vec{S_2}$ oder $\vec{S_1}$ + $\vec{S_2}$ vornimmt.

Die in Fig. 8 aufgezeigte Ausführung in Mixed-Signal-Technologie hat den Vorteil, dass die Abgleicheinheit (7) und sogar die gesamte Elektronik (8) samt Sensoranordnung (2) auf einem ASIC mit festgelegten Hardwarefunktionen für einen Anbau-/Einbau-Messgeber (200) z. B. in Hall-Sensortechnologie ausgeführt werden kann, ohne dazu einen separaten Mikrokontroller/Prozessor zu benötigen. Dies ermöglicht besonders kompakte und integrierbare Messgeber-Ausführungen (200), die bei Einbaugeber gefragt sind.

Die Fig. 9 gibt im Prinzip den gleichen Sachverhalt wie in Fig. 8 wieder, jedoch mit überwiegend digitaler statt analoger Verarbeitung der vektoriellen Größen $\vec{S_1}$ oder $\vec{S_1}$ - $\vec{S_2}$ bzw. $\vec{S_2}$ oder $\vec{S_1}$ + $\vec{S_2}$ . Bis zur analogen Signalausgabe der von den Sensoreinheiten (2) über Differenzverstärker gebildeten Vektoren $\vec{S_1}$ bzw. $\vec{S_2}$ ist die Signalaufbereitung in der Abgleicheinheit (7) der Fig. 9 identisch mit der Fig. 8. Unmittelbar danach werden die analogen Signalgrößen $\vec{S_1}$ und $\vec{S_2}$ über Interpolatoren bzw. AD-Wandler (96) sofort digitalisiert. Dies erlaubt die digitalen Werte entsprechend den vier Grundrechenarten (Addieren, Subtrahieren, Multiplizieren, Dividieren) die gleichen Maßnahmen wie in Fig. 8 zu treffen. Die Methode der Vektorgrößenbildung $\vec{S_1}$ - $\vec{S_2}$ (84) bzw. $\vec{S_1}$ + $\vec{S_2}$ (85), wenn die Phasenverschiebung zwischen $\vec{S_1}$ und $\vec{S_2}$ nicht 90° = π/2 ist, die Amplitudenbestimmung, die Referenzbestimmung und die Geschwindigkeitsermittlung ist die gleiche wie in Fig. 8, wobei die Ausführung der Operationen rein auf digitalem Weg erfolgt. Die digitale Signalverarbeitung (92) ist daher etwas umfangreicher als die in der Fig. 8 (97). Ebenso erfolgt die Feinwertbildung des Absolutwertes (77) jetzt rein rechnerisch über die arc tan φ-Bildung rein digital in der Absolutwertbestimmung (94) , statt in der analogen Interpolationseinheit (AD-Wandlung) (90) der Fig. 8. Die Messwertverarbeitung samt Gesamtabsolutwertbestimmung mit Datentransfer (93) und Binär-Ausgabe/Binär-Eingabe (100) ist gleich der in der Fig. 8.

Die in Fig. 9 beschriebene Ausführung ist zweckmäßigerweise mit einem Mikrokontroller/Prozessor ausgestattet, um die beschriebenen Rechenvorgänge durchzuführen. Diese Lösung ist dann von besonderem Vorteil, wenn ohnehin für noch andere Funktionen im Messgeber (200), (wie z. B. flexible Parametrisierung im Betriebseinsatz) gefragt sind und die AD-Wandler (96) bzw. Interpolatoren sich klein und kostengünstig in die Messgeber-Elektronik (8) einbeziehen lassen.

Auch die in Fig. 8 beschriebene Teilstrecken-Sensoreinheit (110) mit Sin/Cos- bzw. A/B-Ausgabe (43) ist einschließlich der Verstärkerschaltung (12) zur A/B-Teilstreckengröße (76) für die Gesamtabsolutwertbildung gleich. Damit wird auch gezeigt, dass die unterschiedlichen Ausführungen der Abgleicheinheit (7) mit mehr oder weniger digitaler Signalverarbeitung auf die gleiche Methode der erfinderischen Signalverarbeitung zurückzuführen ist und auch zu gleichen Ergebnissen führt.

**Patentansprüche**

1. Messeinrichtung enthaltend eine Sensoranordnung (2) zur Erfassung von Größen, insbesondere von Winkeln- oder Wegstrecken, die wenigstens zwei zueinander phasenverschobene Signale in stetiger Funktion erzeugt und bei der diese Signale einer Messwertaufbereitung zugeführt werden, **dadurch gekennzeichnet, dass** eine Abgleicheinheit (7) der Sensoranordnung (2) nachgeschaltet ist, die die Amplituden der zueinander phasenverschobenen Signale (41, 42) aneinander angleicht und/oder aus phasenverschobenen Signalen (41, 42) um etwa 90° gegeneinander phasenverschobenen Signale erzeugt, die ausgewertet und zur Weiterverarbeitung ausgegeben werden.

2. Messeinrichtung nach Anspruch 1, **dadurch gekennzeichnet, dass** das Angleichen zu den Zeitpunkten der sich ergebenden Schnittpunkte der phasenverschobenen Signale mit der gemeinsamen Referenz vorgenommen wird.

3. Messeinrichtung nach Anspruch 1 oder 2, **dadurch gekennzeichnet, dass** die phasenverschobenen Sensorsignale sinusoidale Größen.

4. Messeinrichtung nach einem der Ansprüche 1 bis 3 , **dadurch gekennzeichnet, dass** bei beliebig phasenverschobenen Größen die 90° Verschiebung durch Addition bzw. Subtraktion der Größen erfolgt.

5. Messeinrichtung nach einem der Ansprüche 1 bis 4, **dadurch gekennzeichnet, dass** die gemeinsame Referenz durch Mittelwertbildung von mindestens zwei um 90° phasenverschobenen Größen gebildet wird

6. Messeinrichtung nach einem der Ansprüche 1 bis 4, **dadurch gekennzeichnet, dass** die gemeinsame Referenz fest vorgegeben wird.

7. Messeinrichtung nach einem.der Ansprüche 1 bis 6, **dadurch gekennzeichnet, dass** bei unsymmetrisch liegenden, ermittelten Amplitudenwerten der jeweiligen Größen, deren jeweilige Referenz in der Abgleicheinheit entsprechend angepasst wird.

8. Messeinrichtung nach einem der Ansprüche 1 bis 7, **dadurch gekennzeichnet, dass** die unsymmetrisch liegenden, ermittelten Abstände der Schnittpunkte der jeweiligen Größen mit der gemeinsamen Referenz unter Berücksichtigung deren Verstellgeschwindigkeit ermittelt werden und deren jeweilige Referenz in der Abgleicheinheit entsprechend angepasst werden.

9. Messeinrichtung nach einem der Ansprüche 1 bis 7, **dadurch gekennzeichnet, dass** die durch einen Interpolator aufgelöste Größen unter Berücksichtigung deren Verstellgeschwindigkeit ermittelt und bei Abweichungen voneinander deren jeweilige Amplituden entsprechend angepasst werden.

10. Messeinrichtung nach einem der Ansprüche 1 bis 9, **dadurch gekennzeichnet, dass** die Abstände der Sensoren zueinander unabhängig von der Maßstabteilung gewählt sind.

11. Messeinrichtung nach einem der Ansprüche 1 bis 9, **dadurch gekennzeichnet, dass** die gleiche Messeinrichtung für voneinander abweichende Maßstabteilungen eingesetzt wird.

12. Messeinrichtung nach einem der Ansprüche 1 bis 11, **dadurch gekennzeichnet, dass** aus den phasenverschobenen Signalen zwei um 90° gegeneinander und eine dazu um 180° phasenverschobene Größe gebildet werden und zur Auswertung herangezogen werden.

13. Messeinrichtung nach einem der Ansprüche 1 bis 12, **dadurch gekennzeichnet, dass** die Abgleicheinheit (7) und vorzugsweise auch die gesamte Elektronikeinheit (8) einschließlich der Sensoranordnung (2) auf einem A-SIC mit festgelegten Hardwarefunktionen für einen Einbau- oder Anbau-Messgeber (1, 200) untergebracht ist.

Figur 1

Figur 2

Figur 3

Figur 4

Figur 5

EP 1 437 574 A1

Figur 6

Figur 7

Figur 8

Figur 9

EP 1 437 574 A1

7

97

77

S

111

f

Osz.

110

ΔS

$\Delta S \lessgtr$ const.

112

113

Verst. 1 (71);
Verst. 3 (86)

Verst. 2 (73);
Verst. 4 (88)

Figur 10

**Europäisches Patentamt**

# EUROPÄISCHER RECHERCHENBERICHT

Nummer der Anmeldung

EP 03 02 9898

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 44 19 050 A (NIPPON KOGAKU KK) 8. Dezember 1994 (1994-12-08) | 1,3,4 | G01D5/244 |
| Y | Zusammenfassung * Seite 1 - Seite 2 * --- | 1-13 | |
| X | US 5 943 639 A (KUSUMI MASAAKI ET AL) 24. August 1999 (1999-08-24) | 1-6 | |
| Y | Zusammenfassung * Spalte 1 - Spalte 2 * * Spalte 3, Zeile 53 - Spalte 7, Zeile 27; Abbildungen 13,14 * --- | 1-13 | |
| X | DE 101 13 871 A (PHILIPS CORP INTELLECTUAL PTY) 26. September 2002 (2002-09-26) * Absatz [0004] - Absatz [0022] * --- | 1,2,10, 11 | |
| Y | EP 0 394 942 A (CANON KK) 31. Oktober 1990 (1990-10-31) * Spalte 2, Zeile 51 - Spalte 3, Zeile 40; Abbildung 1 * --- | 12 | |
| X | US 5 485 407 A (ISHIMOTO SHIGERU ET AL) 16. Januar 1996 (1996-01-16) * Spalte 1, Zeile 55 - Spalte 2, Zeile 31 * ----- | 1 | **RECHERCHIERTE SACHGEBIETE (Int.Cl.7)** G01D |

Der vorliegende Recherchenbericht wurde für alle Patentansprüche erstellt

| Recherchenort | Abschlußdatum der Recherche | Prüfer |
|---|---|---|
| MÜNCHEN | 12. Februar 2004 | Kallinger, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 02 9898

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 4419050 | A | 08-12-1994 | JP | 3208933 B2 | 17-09-2001 |
| | | | JP | 6341855 A | 13-12-1994 |
| | | | DE | 4419050 A1 | 08-12-1994 |
| | | | US | 5414516 A | 09-05-1995 |
| US 5943639 | A | 24-08-1999 | JP | 3367226 B2 | 14-01-2003 |
| | | | JP | 8122097 A | 17-05-1996 |
| | | | DE | 69518964 D1 | 02-11-2000 |
| | | | DE | 69518964 T2 | 01-02-2001 |
| | | | EP | 0708311 A2 | 24-04-1996 |
| DE 10113871 | A | 26-09-2002 | DE | 10113871 A1 | 26-09-2002 |
| | | | EP | 1243899 A1 | 25-09-2002 |
| | | | JP | 2003149001 A | 21-05-2003 |
| | | | US | 2002171418 A1 | 21-11-2002 |
| EP 0394942 | A | 31-10-1990 | JP | 2285705 A | 26-11-1990 |
| | | | EP | 0394942 A2 | 31-10-1990 |
| US 5485407 | A | 16-01-1996 | JP | 6167354 A | 14-06-1994 |
| | | | DE | 69316845 D1 | 12-03-1998 |
| | | | DE | 69316845 T2 | 20-05-1998 |
| | | | EP | 0599175 A1 | 01-06-1994 |

EPO FORM P0461

Für nähere Einzelheiten zu diesem Anhang : siehe Amtsblatt des Europäischen Patentamts, Nr.12/82